Europäisches Patentamt

European Patent Office

Office européen des brevets

(11) Veröffentlichungsnummer: **0 506 013 A2**

# EUROPÄISCHE PATENTANMELDUNG

(21) Anmeldenummer: **92105136.3**

(22) Anmeldetag: **25.03.92**

(51) Int. Cl.5: **G01M 3/28**

(30) Priorität: **28.03.91 DE 4110375**

(43) Veröffentlichungstag der Anmeldung:
**30.09.92 Patentblatt 92/40**

(84) Benannte Vertragsstaaten:
**AT BE CH DE DK ES FR GB IT LI LU NL PT SE**

(71) Anmelder: **Hans Brochier GmbH & Co**
**Kreuzstrase 11**
**W-8016 Feldkirchen(DE)**

(72) Erfinder: **Janotta, Klaus**
**Wolf-Huber-Strasse 1**
**W-8260 Mühldorf a. Inn(DE)**
Erfinder: **Angstmann, Ralf-Peter, Dipl.-Ing.**
**Sankt-Sylvester-Strasse 6a**
**W-8011 Forstinning(DE)**

(74) Vertreter: **Klingseisen, Franz, Dipl.-Ing.**
**Dr. F. Zumstein Dipl.-Ing. F. Klingseisen**
**Bräuhausstrasse 4**
**W-8000 München 2(DE)**

(54) **Verfahren und Vorrichtung zum Prüfen von Rohrleitungen.**

(57) Es wird ein Verfahren und eine Vorrichtung zum Prüfen von Rohrleitungen auf Dichtigkeit mittels eines fernsteuerbaren Gerätes vorgeschlagen, das in der zu prüfenden Rohrleitung verfahrbar ist und mittels dem die Rohrleitung abgedichtet werden kann, wobei zum einfachen Prüfen unterschiedlich langer Prüfsstrecken zwei derartige Geräte eingesetzt werden, die unabhängig voneinander in der zu prüfenden Rohrleitung verfahrbar sind, wobei durch wenigstens eines dieser Geräte ein Prüfdruck zwischen den von den beiden Geräten ausgebildeten Abdichtstellen angelegt und von außen überwacht wird.

Fig. 3

EP 0 506 013 A2

Die Erfindung betrifft ein Verfahren und eine Vorrichtung zum Prüfen von Rohrleitungen nach dem Oberbegriff der Ansprüche 1 und 2 bzw. des Anspruchs 3.

Aus dem DE-GM 80 08 255 ist ein fernsteuerbares, in einer Rohrleitung verfahrbares Gerät bekannt, das zum Überprüfen der Dichtigkeit von Rohrverbindungen in einem vorgegebenen festen Abstand voneinander zwei Dichtbälge aufweist, die zum Abdichten der Rohrleitung beiderseits einer Rohrverbindung durch Druckluft oder dgl. radial aufweitbar sind und zwischen denen ein Prüfdruck an dem abgedichteten Abschnitt der Rohrleitung angelegt werden kann, der von außerhalb der Rohrleitung gesteuert und überwacht wird. Dieses bekannte Gerät ist für die Druckprüfung längerer Rohrleitungsabschnitte nicht geeignet, weil es durch den festen Abstand der beiden Dichtbälge nur auf eine relativ kurze Prüflänge beschränkt ist, wie sie durch eine Rohrverbindung vorgegeben wird.

Es ist auch bekannt, auf einem Seil in einem Abstand voneinander aufweitbare Blasen als Abdichteinrichtungen anzubringen, die vor dem Einfahren in die zu prüfende Rohrleitung in ihrem Abstand manuell verstellt werden können. Bei häufiger Änderung der Prüflänge ist das Arbeiten mit dieser bekannten Vorrichtung sehr zeitaufwendig, weil immer wieder der Abstand der Blasen auf dem Seil außerhalb der Rohrleitung neu eingestellt werden muß.

Der Erfindung liegt die Aufgabe zugrunde, ein Verfahren bzw. eine Vorrichtung der eingangs angegebenen Art so auszubilden, daß unterschiedlich lange Prüfstrecken in Rohrleitungen mit geringem Zeitaufwand überprüft werden können.

Diese Aufgabe wird erfindungsgemäß durch die Merkmale im Kennzeichen der Ansprüche 1 und 2 bzw. des Anspruchs 3 gelöst. Dadurch, daß mit dem Gerät an einer gewünschten Stelle in der zu überprüfenden Rohrleitung eine Abdichteinheit positioniert bzw. eine Abdichtung vorgenommen und dann das Gerät zum Abdichten der Rohrleitung an eine andere Stelle oder ein zusätzliches verfahrbares Gerät unabhängig von der bereits abgedichteten Stelle verfahren werden kann, können beliebig lange Rohrabschnitte überprüft werden. Durch Ankuppeln der Abdichteinheit am Gerät und Verfahren in eine andere Position kann schnell und ohne Einstellmaßnahmen am Gerät außerhalb der Rohrleitung eine neue Prüfstrecke eingestellt werden. Insgesamt kann damit eine schnelle und wirtschaftliche Überprüfung insbesondere von solchen Rohrleitungen vorgenommen werden, an denen in unterschiedlichen Abständen Abzweigungen vorgesehen sind, wie dies bei Abwasserkanälen und dgl. der Fall ist.

Vorteilhafte Ausgestaltungen der Erfindung sind in der nachfolgenden Beschreibung und in den weiteren Ansprüchen angegeben.

Eine beispielsweise Ausführungsform der Erfindung wird nachfolgend anhand der Zeichnung näher erläutert. Es zeigen

Fig. 1 eine Darstellung zur Erläuterung des Verfahrensablaufs,

Fig. 2 eine schematische Seitenansicht des Gerätes im Fahrzustand, und

Fig. 3 eine entsprechende Ansicht im Prüfzustand.

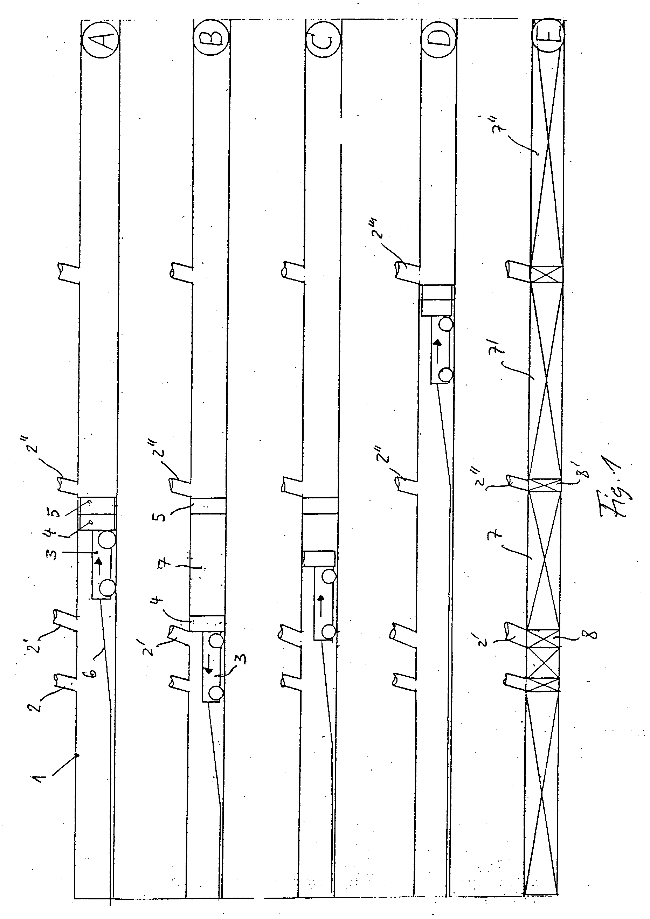

In Fig. 1 ist mit 1 allgemein eine Rohrleitung bezeichnet, die in verschiedenen Abständen mit Abzweigungen 2, 2' usw. versehen ist. In die Rohrleitung wird ein verfahrbares Gerät 3 eingebracht, an dem eine Abdichteinrichtung 4 angebracht ist und das mit einer an- und abkuppelbaren Abdichteinheit 5 versehen ist. Für die Fernsteuerung des Gerätes kann eine Versorgungsleitung 6 zwischen Gerät und einer Steuer- und Überwachungseinrichtung außerhalb der Rohrleitung 1 vorgesehen sein, es ist aber ebenso möglich, daß das Gerät über Funk, also ohne Leitung 6, ferngesteuert, bedient und überwacht wird.

Zum Überprüfen des Rohrabschnittes zwischen den Abzweigungen 2' und 2'' wird das Gerät 3 mit der daran angekuppelten Abdichteinheit 5 in die in Fig. 1A dargestellte Stellung verfahren, in der die Abdichteinheit 5 kurz vor der Rohrabzweigung 2'' angeordnet ist. Diese Positionierung kann durch eine am Gerät 3 angebrachte Fernsehkamera überwacht werden. Hierauf wird in der Stellung A zunächst mittels der Abdichteinheit 5 die Rohrleitung abgedichtet, worauf das Gerät 3 von der Abdichteinheit 5 abgekuppelt und in die Stellung B verfahren wird, in der sich die am Gerät 3 angebrachte Abdichteinrichtung 4 unmittelbar vor der Rohrabzweigung 2' befindet. Hierauf wird die Rohrleitung durch die Abdichteinrichtung 4 abgedichtet und über das Gerät 3 ein Prüfdruck in dem so gebildeten Prüfabschnitt 7 angelegt, der über die nicht dargestellten Steuer- und Überwachungseinrichtung außerhalb der Rohrleitung 1. überwacht werden kann.

Nach Beendigung der Druckprüfung wird der Prüfdruck im Abschnitt 7 abgebaut und die Abdichteinrichtung 4 eingezogen, so daß das Gerät 3 zum Ankuppeln der Abdichteinheit 5 verfahren werden kann, wie Fig. 1C zeigt. Nach dem Ankuppeln der Abdichteinheit 5 wird die durch diese ausgebildete Abdichtung freigegeben und das Gerät 3 mit Abdichteinheit 5 in die Stellung D verfahren, in der die Abdichteinheit 5 unmittelbar vor der nächsten Abzweigung 2''' positioniert wird. Hierauf wiederholt sich der Vorgang zum Überprüfen des Leitungsabschnitts zwischen den Abzweigungen 2'' und 2''''.

Fig 1E zeigt schematisch die einzelnen Prüfabschnitte 7, 7' usw., die auf diese Weise überprüft werden können, ohne daß das Gerät 3 aus der Rohrleitung 1 herausgefahren werden muß.

Eine Abzweigung kann in der Weise auf Dichtigkeit überprüft werden, daß mittels des Gerätes 3 beiderseits des in Fig. 1E mit 8 bezeichneten Bereichs die Abdichteinheit 5 und die Abdichteinrichtung 4 mittels des Gerätes 3 positioniert wird, worauf nach Abdichten des nicht dargestellten Endes der Abzweigung über das Gerät 3 ein Prüfdruck angelegt und überwacht werden kann. Auf diese Weise können insbesondere Hausanschlüsse bei Abwasserkanälen auf Dichtigkeit überprüft werden, wenn das im Haus oder in einem Revisionsschacht mündende Ende der Abzweigleitung zusätzlich abgedichtet wird.

Die Abdichteinheit 5 wird beim Abkuppeln vollständig vom verfahrbaren Gerät 3 getrennt, jedoch ist es auch möglich, zwischen Gerät 3 und Abdichteinheit 5 eine Prüfleitung oder dgl. vorzusehen, mittels der beispielsweise der Abdichtdruck an der Abdichteinheit 5 überwacht werden kann. Hierdurch wird die Unabhängigkeit der Positionierung der Abdichteinheit 5 und die Verfahrbarkeit des Gerätes 3 bei entkuppelter Abdichteinneit nicht behindert.

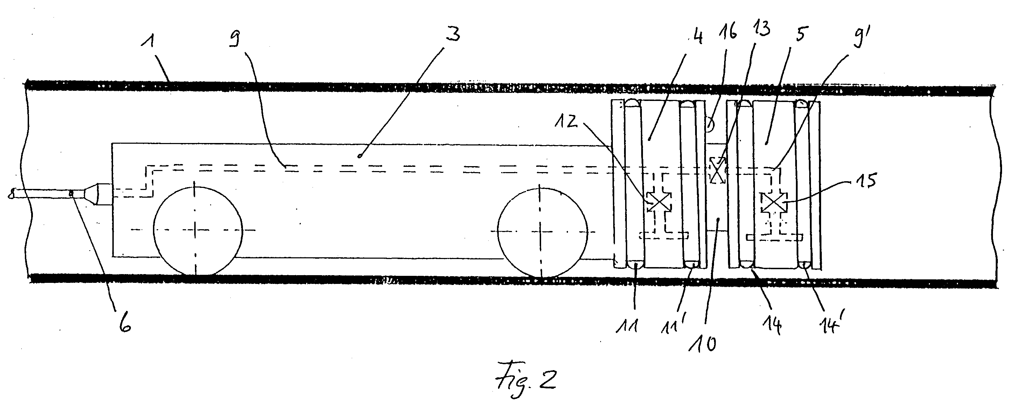

Fig. 2 zeigt schematisch eine Seitenansicht des Gerätes mit angekuppelter Abdichteinheit. Das verfahrbare Gerät 3 kann in an sich bekannter Weise mit verschiedenen fernsteuerbaren Einrichtungen versehen sein, wobei in Fig. 2 lediglich eine Druckleitung 9 angedeutet ist, die bei dem dargestellten Ausführungsbeispiel durch die Versorgungsleitung 6 und das Gerät 3 zur Abdichteinrichtung 4 und zu einer Kuppeleinheit 10 verläuft. Die am Gerät 3 fest angebrachte Abdichteinrichtung 4 weist bei dem dargestellten Ausführungsbeispiel 2 in einem geringen Abstand voneinander angeordnete Dichtbälge 11, 11' auf, die über ein fernsteuerbares Ventil 12 mit der Druckleitung 9 in Verbindung stehen. In der Kuppeleinheit 10 ist ein weiteres fernsteuerbares Ventil 13 vorgesehen, mittels dem die Druckleitung 9 mit deren Verlängerung 9' in der Abdichteinheit 5 verbunden ist. Die Abdichteinheit 5 weist bei dem dargestellten Ausführungsbeispiel ebenfalls zwei beabstandete Dichtbälge 14, 14' auf, die über ein Ventil 15 mit der Druckleitung 9 in Verbindung stehen.

In der Stellung A in Fig. 1 wird zunächst das Ventil 12 geschlossen, worauf bei geöffetem Ventil 15 die Dichtbälge 14, 14' an der Abdichteinheit 5 radial aufgeweitet werden, so daß sie auf dem Innenumfang der Rohrleitung 1 anliegen und diese abdichten. Danach wird über die im einzelnen nicht dargestellte fernsteuerbare Kuppeleinrichtung die Abdichteinheit 5 nach Schließen des Ventils 15 und des Ventils 13 abgekuppelt. In der Stellung B in Fig. 1 wird dann das Ventil 12 geöffnet, so daß die Dichtbälge 11, 11' über die Druckleitung 9 zum radialen Aufweiten und Abdichten der Rohrleitung beaufschlagt werden können. Die für das Anlegen und Überwachen eines Prüfdrucks zwischen den Abdichtstellen vorgesehenen Einrichtungen sind nicht dargestellt. Lediglich bei 16 ist die Anbringung einer TV-Kamera angedeutet.

Zum Freigeben der Abdichtung werden zunächst die Dichtbälge 11, 11' über das Ventil 13 oder ein in der, Druckleitung 9 angeordnetes Ventil entlüftet, worauf das Gerät 3 an die Abdichteinheit 5 herangefahren und über die Kuppeleinheit 10 an dieser angekuppelt wird. Hierauf können durch Öffnen der Ventile 15 und 13 die Dichtbälge 14 und 14' entlüftet werden, so daß das Gerät insgesamt wieder in eine neue Prüfposition verfahren werden kann.

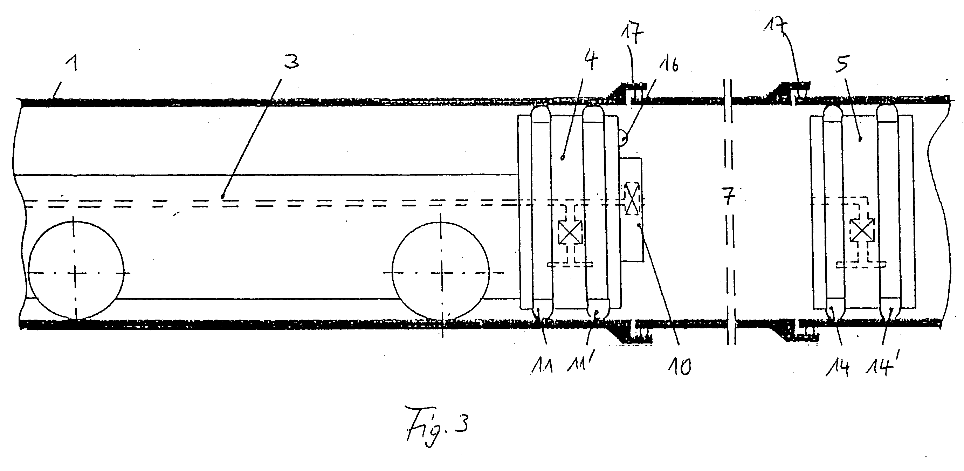

Fig. 3 zeigt schematisch die abgekuppelte Abdichteinheit 5 mit aufgeweiteten Dichtbälgen. Bei 17 sind Rohrverbindungen im Prüfabschnitt 7 angedeutet.

Sowohl die Abdichteinheit 5 als auch die Abdichteinrichtung 4 am Gerät 3 können mit einer anderen als der dargestellten Dichtungseinrichtung versehen sein, beispielsweise nur mit jeweils einem Dichtbalg. Ferner kann auch anstelle eines Dichtbalges eine andere bekannte Dichteinrichtung vorgesehen sein.

Es kann auch an der Abdichteinheit 5 eine TV-Kamera angebracht sein, um die Positionierung der Abdichteinheit besser überwachen zu können, wobei in der Kuppeleinheit 10 entsprechende Leitungskupplungen für elektrische Verbindungen und dgl. vorgesehen sind. Es ist aber auch möglich, zwischen dem Gerät 3 und der Abdichteinheit 5 ein Versorgungskabel vorzusehen, das auch in der Prüfstellung in Fig. 3 die Abdichteinheit 5 mit dem Gerät 3 verbindet, ansonsten aber den An- und Abkuppelvorgang nicht behindert.

Für die Kuppelverbindung zwischen Gerät 3 und Abdichteinheit 5 wird vorzugsweise eine an sich bekannte Schnellkupplung vorgesehen, mittels der unterschiedliche Versorgungsleitungen durch ein einzelnes Verstellelement, das durch eine Fernsteuereinrichtung verstellt werden kann, ge- und entkuppelt werden können.

Die Abdichteinrichtung 4 ist vorzugsweise insgesamt auswechselbar am Gerät 3 angebracht, so daß für unterschiedliche Durchmesser der zu überprüfenden Rohrleitungen eine entsprechend dimensionierte Abdichteinrichtung am Gerät 3 aufgesetzt werden kann. Die Kuppeleinheit 10 kann dabei fest am Gerät 3 angebracht sein, so daß nur die Abdichteinrichtung ausgewechselt zu werden braucht. Auf diese Weise ergibt sich auch bei der Abdichteinheit 5 eine einheitliche Kuppeleinrichtung, auf der unterschiedlich dimensionierte Abdichteinrichtungen aufgesetzt werden können.

Die Abdichteinrichtungen am Gerät 3 und an der Abdichteinheit 5 können zweckmäßigerweise identisch ausgebildet werden, so daß beim Auswechseln dieses Bauteils die gleiche Abdichteinrichtung mit beispielsweise größerem Durchmesser sowohl an der Abdichteinheit 5 als auch am Gerät 3 aufgesetzt werden kann.

An der Kuppeleinheit 10 kann beispielsweise ein fernsteuerbarer Magnet angebracht sein, mittels dem die Abdichteinheit 5 an die Kuppeleinheit 10 fest angedrückt werden kann. Z.B. kann auch eine trichterförmige Führung zur Zentrierung beim Kuppelvorgang vorgesehen werden.

Durch die beschriebene Bauweise ist es möglich, Rohrleitungen verschiedenster Art in unterschiedlicher Weise auf Dichtigkeit zu prüfen. So kann das beschriebene Gerät auch zur Schadenssuche dadurch eingesetzt werden, daß bei Feststellung eines Druckabfalls in einer Prüfstrecke das Gerät 3 schrittweise in Richtung auf die Abdichteinheit 5 verfahren und jeweils ein Prüfdruck angelegt wird. Auf diese Weise kann die undichte Stelle relativ genau lokalisiert werden. Ebenso ist es möglich, lediglich eine Rohrverbindung auf Dichtigkeit dadurch zu überprüfen, daß die Abdichteinheit 5 und die Abdichteinrichtung 4 beiderseits der Rohrverbindung positioniert werden.

Nach einer abgewandelten Ausführungsform der Erfindung können zwei selbstfahrende Geräte verwendet werden, die unabhängig voneinander zum Abdichten an verschiedenen Stellen einer zu prüfenden Rohrleitung verfahren werden können, wobei durch wenigstens eines dieser Geräte ein Prüfdruck zwischen den Abdichtstellen eingeleitet werden kann, der von außerhalb der Rohrleitung gesteuert und überwacht wird. Bei einer derartigen Ausführungsform kann ein Gerät lediglich mit einer fernsteuerbaren Abdichteinrichtung versehen sein, während das andere Gerät mit den übrigen Fernsteuereinrichtungen versehen wird und entsprechend größer ausgebildet werden kann. Auch ist es möglich, zwei der anhand der beschriebenen Figuren verwendeten Geräte einzusetzen.

Vorzugsweise wird bei dem beschriebenen Verfahren gleichzeitig eine Ortung von eventuell vorhandenen Leckagen in der überprüften Rohrleitung vorgenommen.

Beim Austritt des Prüfmediums Luft durch undichte Stellen der Rohrleitung entsteht ein Ausströmgeräusch, das durch geeignete Sensoren, wie Mikrophone, erfaßt werden kann. Um aus dem aufgenommenen Signal auf die Lage der Leckstelle schließen zu können, kann in verschiedener Weise vorgegangen werden.

So ist es möglich, jeweils einen Sensor in den beiden Abdichteinheiten vorzusehen, so daß aus dem von den beiden Sensoren erfaßten Signal durch Kreuzkorrelationsanalyse die Lage der Leckstelle oder der Leckstellen ermittelt werden kann.

Die Schallortung kann auch mit nur einem Sensor erfolgen, wobei zur Lagebestimmung Reflexionseffekte von der zweiten Abdichteinheit berücksichtigt werden. Die rechnerische Auswertung entspricht dem bei der zuvor genannten Kreuzkorrelationsanalyse.

Schließlich ist es auch möglich, zwischen den beiden Abdichteinheiten ein Mikrophon beispielsweise über eine Verbindungsleitung zwischen den beiden Abdichteinheiten zu bewegen, so daß aus der Intensität des empfangenen Signals auf die Lage der Leckstelle geschlossen werden kann.

**Patentansprüche**

1. Verfahren zum Prüfen von Rohrleitungen auf Dichtigkeit mittels eines fernsteuerbaren Gerätes, das in der zu prüfenden Rohrleitung verfahrbar ist und mittels dem die Rohrleitung abgedichtet werden kann,
dadurch gekennzeichnet,
daß zwei derartige Geräte eingesetzt werden, die unabhängig voneinander in der zu prüfenden Rohrleitung verfahrbar sind, wobei durch wenigstens eines dieser Geräte ein Prüfdruck zwischen den von den beiden Geräten ausgebildeten Abdichtstellen angelegt und von außen überwacht wird.

2. Verfahren zum Prüfen von Rohrleitungen auf Dichtigkeit mittels eines fernsteuerbaren Gerätes, das in der zuprüfenden Rohrleitung verfahrbar und mittels dem die Rohrleitung an beabstandeten Stellen zum Anlegen eines Prüfdruckes dazwischen abdichtbar ist,
dadurch gekennzeichnet,
daß man mittels des Gerätes eine Abdichteinheit an einer Stelle in der Rohrleitung positioniert, das Gerät von der Abdichteinheit trennt und in eine andere Stellung verfährt, in der mittels des Gerätes die Rohrleitung erneut abgedichtet wird, worauf Prüfdruck zwischen den abgedichteten Stellen über das Gerät angelegt wird, und daß zum Einstellen einer neuen Prüfstrecke das Gerät mit der Abdichteinheit gekuppelt und in eine neue Position verfahren wird.

3. Vorrichtung zum Prüfen von Rohrleitungen auf Dichtigkeit, mit einem in der zu prüfenden Rohrleitung verfahrbaren, fernsteuerbaren Gerät, das mit wenigstens zwei in einem Abstand voneinander vorgesehenen Abdichteinrichtungen versehen ist,
dadurch gekennzeichnet,
daß das Gerät (3) mit einer an- und abkuppelbaren Abdichteinheit (5) versehen ist, auf der die eine Abdichteinrichtung (14) angebracht ist, während die andere Abdichteinrichtung (11) mit dem verfahrbaren Gerät (3) fest verbunden ist.

4. Vorrichtung nach Anspruch 3,
dadurch gekennzeichnet,
daß die aus einem Ringkörper mit Abdichtelement (11) gebildete Abdichteinrichtung am Gerät (3) und die entsprechend ausgebildete Abdichteinrichtung an der Abdichteinheit (5) auswechselbar angebracht sind.

5. Vorrichtung nach den Ansprüchen 3 und 4,
dadurch gekennzeichnet,
daß als Abdichteinrichtungen radial aufweitbare Dichtbälge (11, 14) vorgesehen sind, die über ventilgesteuerte Druckmittelleitungen aufblasbar und entlüftbar sind.

6. Vorrichtung nach den Ansprüchen 3 bis 5,
dadurch gekennzeichnet,
daß am Gerät (3) eine Kuppeleinheit (10) mit einer fernsteuerbaren Schnellkupplung angebracht ist, mittels der durch Verstellen eines einzelnen Verstellelementes eine Anzahl von verschiedenen Leitungen gleichzeitig kuppelbar und entkuppelbar ist.

7. Vorrichtung nach den Ansprüchen 3 bis 6,
dadurch gekennzeichnet,
daß zwischen Abdichteinheit (5) und Gerät (3) ein Versorgungskabel oder eine Versorgungsleitung vorgesehen ist.

8. Vorrichtung nach Anspruch 7,
dadurch gekennzeichnet,
daß über das Versorgungskabel oder die Versorgungsleitung ein akustischer Sensor zur Aufnahme eines Ausströmgeräusches in der Rohrleitung bewegbar ist.

9. Vorrichtung nach den Ansprüchen 3 bis 6,
dadurch gekennzeichnet,
daß am Gerät (3) und/oder an der Abdichteinheit (5) ein akustischer Sensor zur Aufnahme eines Ausströmgeräusches in der Rohrleitung vorgesehen ist.

Fig. 1

EP 0 506 013 A2

Fig. 2

Fig. 3